(19) **Europäisches Patentamt / European Patent Office / Office européen des brevets**

(11) **EP 3 936 849 B1**

(12) # EUROPEAN PATENT SPECIFICATION

(45) Date of publication and mention
of the grant of the patent:
**17.09.2025 Bulletin 2025/38**

(21) Application number: **19919171.9**

(22) Date of filing: **18.11.2019**

(51) International Patent Classification (IPC):
**G01M 13/045** (2019.01)  **G01H 1/00** (2006.01)

(52) Cooperative Patent Classification (CPC):
**G01H 1/003; G01M 13/045**

(86) International application number:
**PCT/JP2019/045156**

(87) International publication number:
**WO 2020/183797 (17.09.2020 Gazette 2020/38)**

(54) **ROLLING BEARING STATUS MONITORING SYSTEM AND STATUS MONITORING METHOD**

WÄLZLAGERZUSTANDSÜBERWACHUNGSSYSTEM UND ZUSTANDSÜBERWACHUNGSVERFAHREN

SYSTÈME DE SURVEILLANCE DE L'ÉTAT D'UN PALIER À ROULEMENT ET PROCÉDÉ DE SURVEILLANCE D'ÉTAT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2019 JP 2019042712**

(43) Date of publication of application:
**12.01.2022 Bulletin 2022/02**

(73) Proprietor: **Hitachi, Ltd.**
**Tokyo 100-8280 (JP)**

(72) Inventors:
• **YAMASHITA, Tomoaki**
**Tokyo 100-8280 (JP)**

• **HENMI, Makoto**
**Tokyo 100-8280 (JP)**
• **TANABE, Yosuke**
**Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(56) References cited:
**EP-A1- 1 211 500    EP-A2- 1 477 783**
**WO-A1-2009/096551    CN-A- 102 269 655**
**JP-A- 2000 171 351    JP-A- 2011 203 218**
**JP-A- H09 257 651    JP-A- S52 123 679**
**US-A1- 2010 332 186    US-B1- 6 526 829**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a condition monitoring system and a condition monitoring method of a roller bearing.

BACKGROUND ART

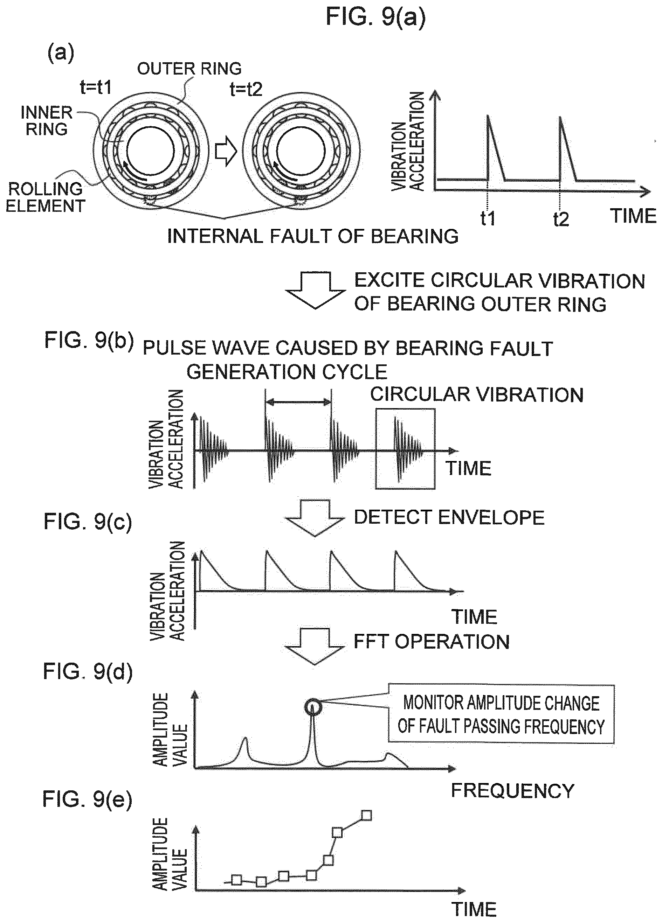

For monitoring the condition of a roller bearing, a vibration acceleration sensor is often used as disclosed in PTL 1, PTL 2, and NPTL 1. The standard condition monitoring method of a bearing based on vibration acceleration measurement is now explained with reference to Fig. 9.

If there is any fault on the inner ring track surface or the outer ring track surface of a roller bearing, a pulse wave is generated each time a rolling element passes by that fault. Moreover, if there is any fault on the rolling element, a pulse wave is generated each time that such fault collides with the inner ring track surface or the outer ring track surface based on the rotation of the rolling element.

For example, in Fig. 9(a), if there is a fault on the outer ring track surface as shown in the cross section of the roller bearing in the left diagram, a periodic shock pulse wave is generated at timing t1 and timing t2 when the rolling element passes by the fault on the outer ring track surface as shown in the right diagram. These periodic shock pulse waves have a waveform as shown in Fig. 9(b), and excite the circular vibration of the outer ring of the bearing. This vibration frequency is a high frequency, and in certain cases it may be 10 kHz or higher.

Thus, foremost, a vibration acceleration sensor is placed around the roller bearing, and the circular vibration is measured at a sampling rate capable of capturing such circular vibration. Subsequently, an envelope is detected as shown in Fig. 9(c) in relation to the obtained vibration waveform, and a pulse wave caused by the fault on the inside of the bearing is extracted. Subsequently, as shown in Fig. 9(d), the frequency that the rolling element passes by the fault and the amplitude value that is double the rotation frequency of the rolling element are evaluated based on FFT operation processing. An abnormality of the bearing is determined by monitoring the time change of the amplitude value as shown in Fig. 9(e). PTL 3 shows a rolling bearing apparatus with sensor includes a sensor unit retaining a plurality of types of sensors for detecting the status of a rolling bearing, in a single holder. The plurality of types of sensors are at least two types of sensors of a rotation speed sensor, a temperature sensor (29a), and an acceleration sensor. PTL 4 shows a method for a probabilistical determination of a time interval between events, wherein the events periodically disturb a signal. The method determines, as a function of time, probabilities of occurrences of the events based on values of the signal, wherein the signal is jittered, and determines, based on the probabilities of the occurrences of the events, probabilities of correspondence of a set of possible time intervals to the time interval between the events producing a set of probabilities of the possible time intervals suitable for determining the time interval between the events. PTL 5 shows a process and apparatus for determining the damage on at least one cyclically moving machine component, whereby a signal caused by the motion of the component is picked up by a sensor. At least one portion of the signal with an adjustable period is separated, and the remaining or separated part of the signal is subjected to damage analysis. In addition, a process and apparatus for separating periodic signal portions from a signal is provided, whereby the signal is supplied as an input signal to a rotating ring storage which is formed by cyclically arranged storage elements which are supplied in succession with the input signal currently at the input of the ring storage. A rotation frequency is synchronized with the period duration of the desired signal portions, and the desired signal portions are obtained as the output signal of the ring storage.

CITATION LIST

PATENT LITERATURE

[PTL 1] Japanese Unexamined Patent Application Publication No. 2006-125976
[PTL 2] Japanese Unexamined Patent Application Publication No. 2012-42338
[PTL 3] EP 1 211 500 A1
[PTL 4] US 2010/332186 A1
[PTL 5] US 6 526 829 B1

NON-PATENT LITERATURE

[NPTL 1] Osami Matsushita et al. "[Part 2] Vibration from Rotating Machinery - Vibration Problem and Vibration Diagnosis of Real Machines", Coronasha, November 1, 2012

SUMMARY OF THE INVENTION

PROBLEMS TO BE SOLVED BY THE INVENTION

Meanwhile, railways, construction machines, and wind generator systems use numerous roller bearings. Even if one of these numerous bearings is damaged in such machines and systems, the rotating shaft may become locked and this may lead to an accident. In order to introduce a monitoring system capable of covering the damage of numerous bearings, it is necessary to install numerous vibration sensors. Moreover, in order to detect a fault that occurred in a bearing, it is necessary to obtain a vibration waveform of a sufficient data length based on high-speed sampling in order to capture the circular vibration of the outer ring of the bearing. Furthermore, it is necessary to prepare numerous expensive A/D converters for quickly digitizing large-capacity analog vibration waveforms. It is also necessary to increase the data storage capacity. Consequently, the cost of introducing a monitoring system will increase.

An object of the present invention is to provide, at a low cost, a condition monitoring system for monitoring a roller bearing in order to resolve the foregoing problems.

MEANS TO SOLVE THE PROBLEMS

The aforementioned object is solved by the invention according to the independent claims. Further preferred developments are described by the dependent claims. In particular it is provided a condition monitoring system of a roller bearing which supports a rotating shaft, comprising: a vibration measurement unit which measures a vibration of the roller bearing; an envelope detection unit which detects an envelope of an amplitude of a vibration waveform based on the vibration of the roller bearing measured with the vibration measurement unit; a pulse wave search unit which searches for a pulse wave of a cycle that matches a predetermined cycle based on a theoretical frequency of a vibration waveform, which is generated when the roller bearing is damaged, from the envelope detected with the envelope detection unit; and a pulse wave extraction unit which extracts a pulse wave of a maximum amplitude value from a pulse wave of a cycle that matches the predetermined cycle obtained from the search conducted by the pulse wave search unit, wherein condition monitoring of the roller bearing is performed based on the maximum amplitude value of the pulse wave extracted with the pulse wave extraction unit.

Moreover, it is provided a condition monitoring method of a roller bearing executed by a condition monitoring system of a roller bearing which supports a rotating shaft, comprising: a vibration measurement step of measuring a vibration of the roller bearing; an envelope detection step of detecting an envelope of an amplitude of a vibration waveform based on the vibration of the roller bearing measured with the vibration measurement unit; a pulse wave search step of searching for a pulse wave of a cycle that matches a predetermined cycle based on a theoretical frequency of a vibration waveform, which is generated when the roller bearing is damaged, from the envelope detected with the envelope detection unit; a pulse wave extraction step of extracting a pulse wave of a maximum amplitude value from a pulse wave of a cycle that matches the predetermined cycle obtained from the search conducted by the pulse wave search unit; and a condition monitoring step of performing condition monitoring of the roller bearing based on the maximum amplitude value of the pulse wave extracted in the pulse wave extraction step.

ADVANTAGEOUS EFFECTS OF THE INVENTION

According to the present invention, it is possible to detect an abnormality of a bearing with the same precision as high-speed sampling by performing sampling at a low speed and a short data length, and reduce the cost of introducing a condition monitoring system.

BRIEF DESCRIPTION OF DRAWINGS

[Fig. 1]

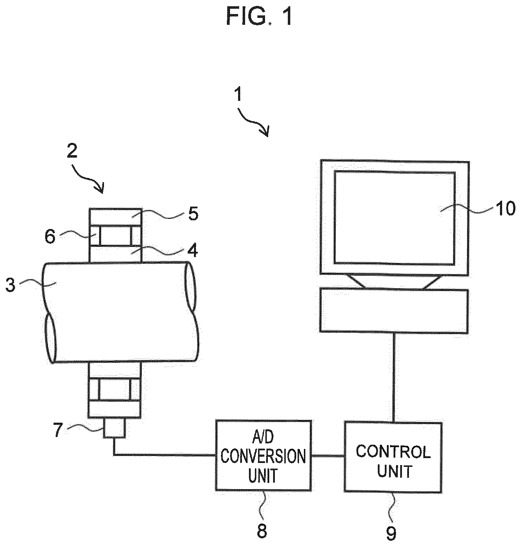

Fig. 1 is an overall schematic configuration diagram of the roller bearing condition monitoring system according to the first embodiment.
[Fig. 2]

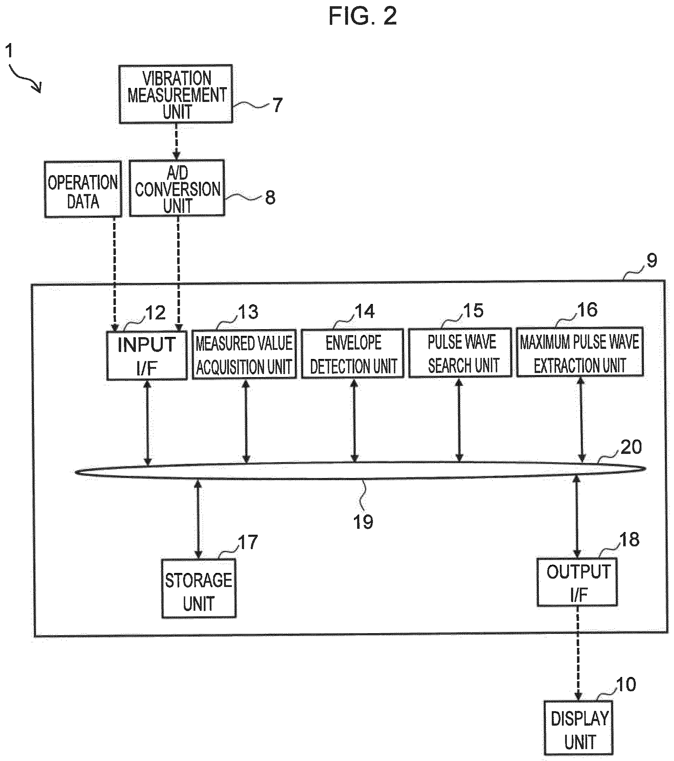

Fig. 2 is a functional block diagram of the roller bearing condition monitoring system according to the first embodiment.
[Fig. 3]

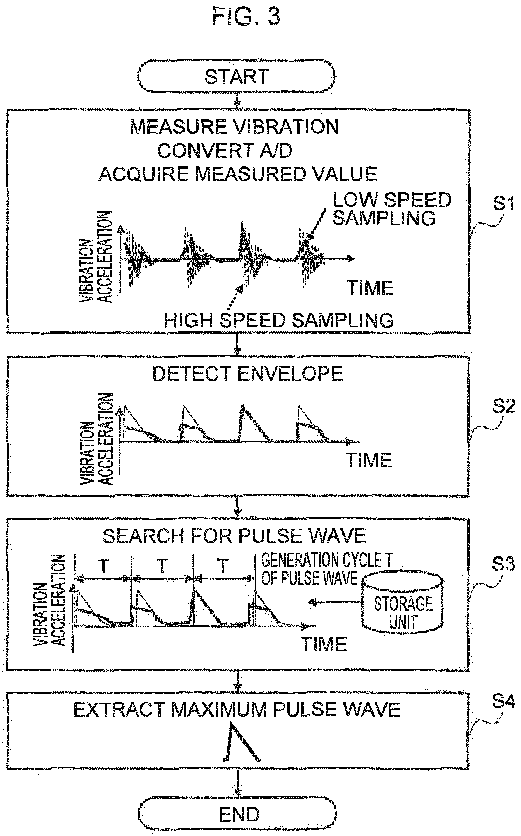

Fig. 3 is an overall processing flowchart of the roller bearing condition monitoring system according to the first embodiment.
[Fig. 4]

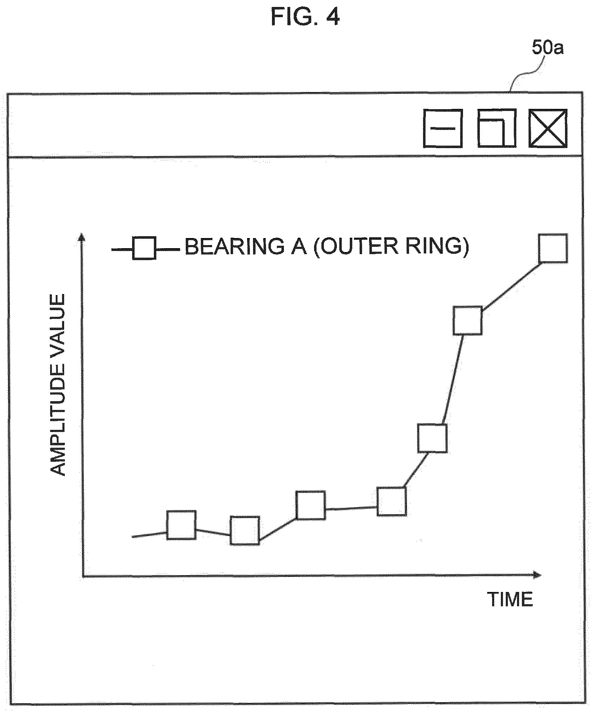

Fig. 4 is a diagram showing an example of the screen display of the display unit of the roller bearing condition monitoring system according to the first embodiment.
[Fig. 5]

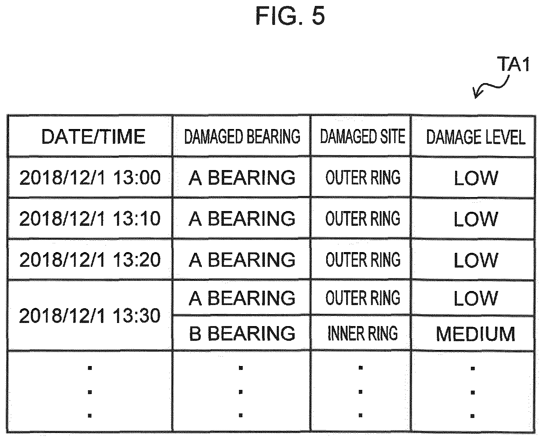

Fig. 5 is a diagram showing an example of the diagnostic result of the roller bearing condition monitoring system according to the first embodiment.
[Fig. 6]

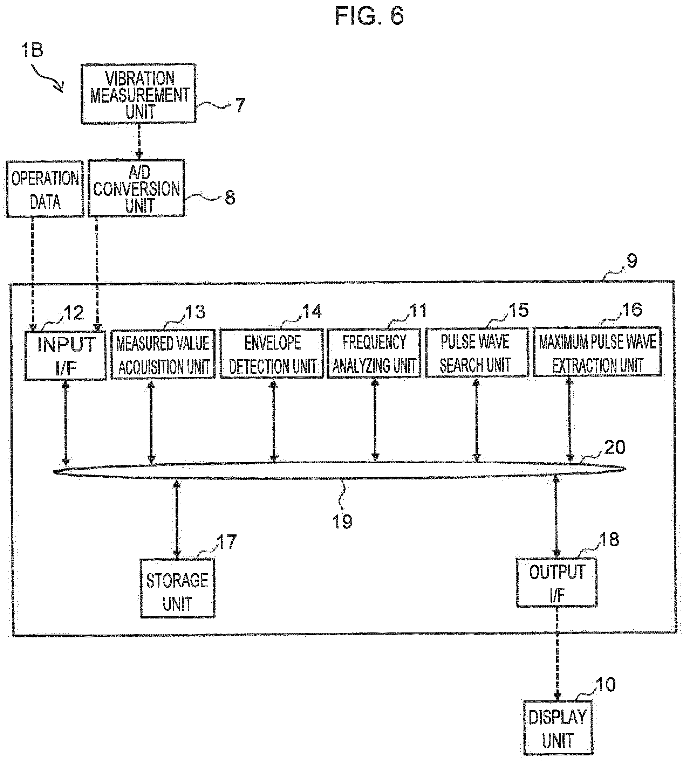

Fig. 6 is a functional block diagram of the roller bearing condition monitoring system according to the second embodiment.
[Fig. 7]

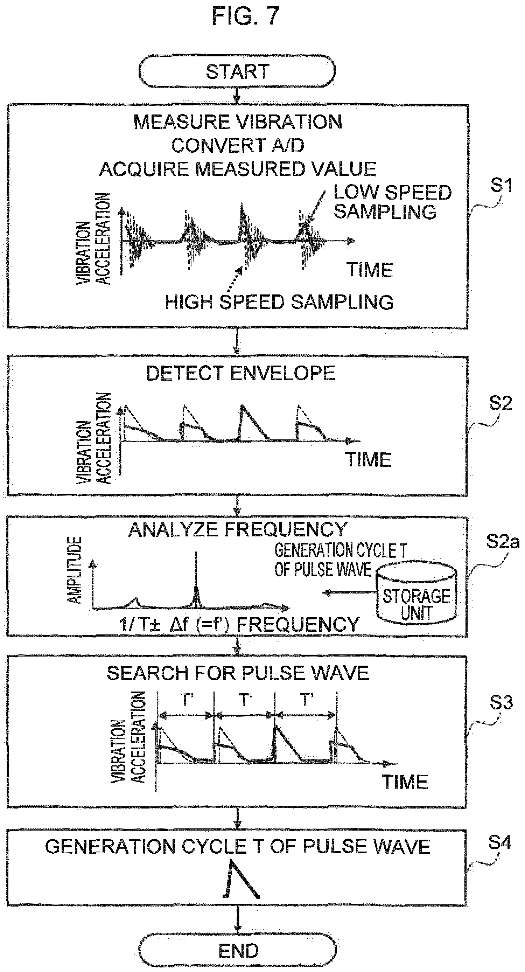

Fig. 7 is an overall processing flowchart of the roller bearing condition monitoring system according to the second embodiment.
[Fig. 8]

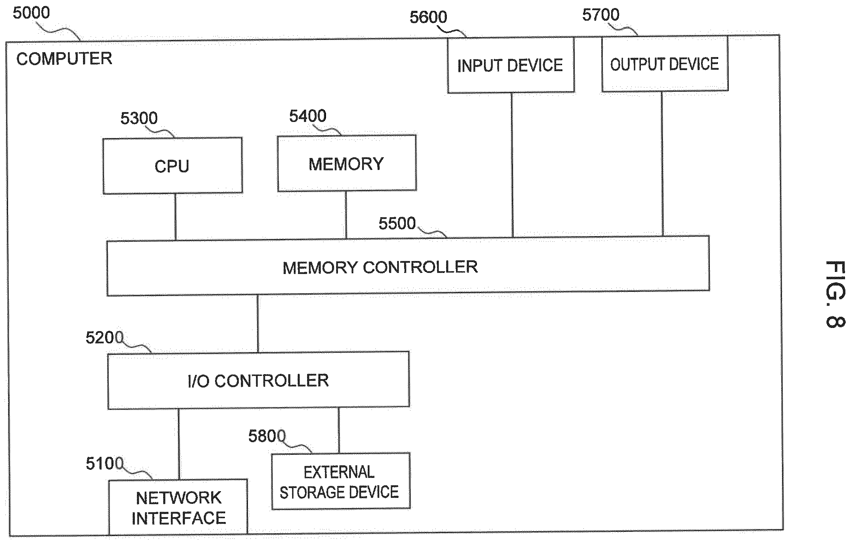

Fig. 8 is a diagram showing the hardware configuration of the computer which realizes the roller bearing condition monitoring system.
[Fig. 9]
Fig. 9 is a diagram explaining the diagnosis method of a general roller bearing condition monitoring system.

DESCRIPTION OF EMBODIMENTS

Embodiments of the present invention are now explained in detail with reference to the appended drawings. In the following explanation, the same reference numeral will be used to indicate the same or similar configurations or configurations having the same or similar function, and any subsequent explanation will be omitted. Moreover, the respective embodiments and respective modified examples may be partially or wholly combined within the technical scope of the present invention and within any scope that is consistent with such technical scope.

In the present specification, the term "roller bearing" includes a rolling ball bearing comprising a cylindrical inner ring disposed so as to cover an outer peripheral surface of a rotating shaft, a cylindrical outer ring disposed concentrically so as to cover an outer peripheral surface of a cylindrical inner ring and be separated at a predetermined spacing radially outward from the outer peripheral surface of the inner ring, and a bearing housing disposed so as to cover an outer peripheral surface of an outer ring, wherein a plurality of spherical balls, as rolling elements, are disposed in a circumferential direction between the outer peripheral surface of the inner ring and the inner peripheral surface of the outer ring, and a rolling roller bearing in which a plurality of columnar rollers, as rolling elements, are disposed in a circumferential direction between the outer peripheral surface of the inner ring and the inner peripheral surface of the outer ring. The term "roller bearing" also include a deep groove bearing in which a plurality of arc-like deep grooves are formed in a circumferential direction and at a predetermined spacing on an outer peripheral surface of a cylindrical inner ring, wherein arc-like deep grooves are formed on an inner peripheral surface of a cylindrical outer ring at positions facing the deep grooves formed on the outer peripheral surface of the inner ring.

The following embodiments can be applied to wind generator systems, construction machines, railways, elevators and other technical fields.

[First embodiment]

<Configuration of roller bearing condition monitoring system according to first embodiment>

The configuration of the roller bearing condition monitoring system according to the first embodiment is foremost explained with reference to Fig. 1 and Fig. 2. Fig. 1 is an overall schematic configuration diagram of the roller bearing condition monitoring system according to the first embodiment. Fig. 2 is a functional block diagram of the roller bearing condition monitoring system according to the first embodiment.

As shown in Fig. 1, the roller bearing condition monitoring system 1 includes at least a display unit 10, a vibration measurement unit 7 such as a sensor for measuring a vibration of a roller bearing 2, an A/D conversion unit 8 which converts a measured analog vibration waveform into a digital vibration waveform, and a control unit 9 which performs operation processing to the measured signals and graphically shows the results and monitors the condition of the roller bearing.

The roller bearing 2 includes, as shown in Fig. 1, a cylindrical inner ring 4 disposed so as to cover an outer peripheral surface of a rotating shaft 3 and which engages with the rotating shaft 3, a cylindrical outer ring 5 disposed concentrically so as to cover an outer peripheral surface of the cylindrical inner ring 4 and be separated at a predetermined spacing radially outward from the outer peripheral surface of the inner ring 4, and a plurality of rolling elements 6 disposed in a circumferential direction between the outer peripheral surface of the inner ring 4 and the inner peripheral surface of the outer ring 5 so as to be mutually separated at a predetermined spacing. Note that Fig. 1 shows a vertical cross section of the inner ring 4, the outer ring 5, and the rolling elements 6 of the roller bearing 2, and shows the part of the rotating shaft 3 that engages with the roller bearing 2. Moreover, in Fig. 1, the bearing housing that covers the outer peripheral surface of the outer ring 5 has been omitted.

In Fig. 1, while one set of the roller bearing 2 and the vibration measurement unit 7 is illustrated for the sake of convenience in explaining the present invention, the roller bearing condition monitoring system 1 may also include multiple sets of the roller bearing 2 and the vibration measurement unit 7. In the foregoing case, the roller bearing condition monitoring system 1 is able to identify the respective roller bearings 2.

As shown in Fig. 2, the roller bearing condition monitoring system 1 of this embodiment includes a vibration measurement unit 7, an A/D conversion unit 8, a control unit 9, and a display unit 10 such as an LCD (Liquid Crystal Display), an LED (Light Emitting Diode) display or an organic EL (Electro Luminescence) display.

The control unit 9 includes an input I/F 12, a measured value acquisition unit 13, an envelope detection unit 14, a pulse wave search unit 15, a maximum pulse wave extraction unit 16, a storage unit 17, and an output I/F 18. These components are mutually connected via an internal bus 19.

The input I/F 12 accepts the input of measured values of the vibration waveform measured with the vibration measurement unit 7 and thereafter digitized with the A/D conversion unit 8, and of input values of operation data (for example, rotation frequency $\Omega$ of the roller bearing 2).

The measured value acquisition unit 13 acquires, via the input I/F 12, the measured values including the vibration waveform measured with the vibration measurement unit 7 and thereafter digitized with the A/D conversion unit 8. This acquired value is transferred to the envelope detection unit 14 via the internal bus 19, and stored in a predetermined storage area of the storage unit 17. Moreover, the measured value acquisition unit 13 converts the measured rotation speed of the roller bearing 2 into rotation speed data by using, for example, an encoder (not shown) or the like, transfers the converted rotation speed data to the pulse wave search unit 15 via the internal bus 19, and stores such converted rotation speed data in a predetermined storage area of the storage unit 17.

The envelope detection unit 14 performs absolute value rectification to the digital vibration waveform acquired with the measured value acquisition unit 13.

The pulse wave search unit 15 searches for a pulse wave which is generated in a theoretically obtained generation cycle T of the pulse wave stored in the storage unit 17 from the digital vibration waveform that underwent the absolute value rectification performed by the envelope detection unit 14. The generation cycle T of the pulse wave will be explained later.

The maximum pulse wave extraction unit 16 extracts a pulse wave in which the amplitude becomes maximum from the pulse wave searched with the pulse wave search unit 15. The maximum pulse wave extraction unit 16 obtains the amplitude value of each of the extracted pulse waves and transfers the results to the maximum pulse wave extraction unit 16 via the internal bus 19.

The maximum pulse wave extraction unit 16 obtains a maximum value of the amplitude among the pulse waves transferred from the pulse wave search unit 15 via the internal bus 19, and stores the obtained maximum value in a predetermined storage area of the storage unit 17 via the internal bus 19. The maximum value of the amplitude obtained with the maximum pulse wave extraction unit 16 is displayed on a screen of the display unit 10 via the output I/F 18.

The storage unit 17 stores the generation cycle T of the pulse wave of the vibration, which occurs when a fault occurs in the roller bearing 2, theoretically obtained from the specification of the roller bearing 2. The storage unit 17 stores the generation cycle T of the pulse wave for each roller bearing 2 having the same specification.

Here, as the types of the generation cycle T of the pulse wave of the vibration stored in the storage unit 17, there are a generation cycle T1 of the pulse wave when a fault occurs in the inner ring 4, a generation cycle T2 of the pulse wave when a fault occurs in the outer ring 5, and a generation cycle T3 of the pulse wave when a fault occurs in the rolling element 6.

The generation cycle T1 of the pulse wave is, when a fault occurs in the inner ring 4, a reciprocal of a frequency f1 of the pulse wave which is generated when the rolling element 6 passes by that fault calculated based on Formula (1) below. The frequency f1 of the pulse wave is also referred to as an inner ring rolling element passing frequency.

The generation cycle T2 of the pulse wave is, when a fault occurs in the outer ring 5, a reciprocal of a frequency f2 of the pulse wave which is generated when the rolling element 6 passes by that fault calculated based on Formula (2) below. The frequency f1 of the pulse wave is also referred to as an outer ring rolling element passing frequency.

The generation cycle T3 of the pulse wave is a reciprocal of a frequency f3 of the pulse wave which is generated when a fault occurs in the rolling element 6 and the fault collides at two locations; specifically, with the inner ring 4 and with the outer ring 5, calculated based on Formula (3) below. The frequency f3 of the pulse wave is a frequency that is double the rotation frequency of the rolling element 6.

$$f1 = N/2 \ (1 + B/P\cos\alpha) \cdot \Omega \ ... \ (1)$$

$$f2 = N/2 \ (1 - B/P\cos\alpha) \cdot \Omega \ ... \ (2)$$

$$f3 = B/P \ \{1 - (B/P)^2 \cos^2\alpha\} \cdot \Omega \ ... \ (3)$$

Here, the respective parameters in Formula (1) to Formula (3) above are as follows; specifically, P: pitch diameter [m] of the bearing, B: diameter [m] of the rolling element, $\alpha$: contact angle [deg] (for a roller bearing, $\alpha = 0$), N: number of rolling elements, and $\Omega$: rotation frequency [Hz] of the roller bearing 2.

Note that the envelope detection unit 14, the pulse wave search unit 15, and the maximum pulse wave extraction unit 16 are realized, for example, by a storage device such as a ROM which stores various programs or a RAM which temporarily stores data in the course of performing operations or in the course of executing programs, or by a processor such as a CPU which executes various programs stored in a ROM.

<Processing performed in roller bearing condition monitoring system according to first embodiment>

The processing performed in the roller bearing condition monitoring system according to the first embodiment is now explained with reference to Fig. 3. Fig. 3 is an overall processing flowchart of the roller bearing condition monitoring system according to the first embodiment. The overall processing of the roller bearing condition monitoring system according to the first embodiment is executed based on a predetermined execution trigger.

As examples of the execution trigger of the overall processing of the roller bearing condition monitoring system, considered may be the following. For example, if the monitoring target of the roller bearing condition is a railway, the execution trigger may be that the train has passed a predetermined route, or that the train has reached a predetermined running speed (steady speed, etc.). Moreover, if the monitoring target of the roller bearing condition is a windmill, the execution trigger may be that the windmill has reached a steady operation (steady output or steady rotation speed, etc.). Otherwise, the overall processing of the roller bearing condition monitoring system may be executed in predetermined time intervals after reaching such steady operation. The roller bearing condition monitoring condition can be made constant and the monitoring accuracy can be ensured by executing the overall processing of the roller bearing condition monitoring system based on a predetermined execution trigger.

In Fig. 3, the vibration measurement result according to this embodiment is shown with a solid line, and the vibration measurement result of the comparative example is shown with a broken line. In this embodiment, the vibration is sampled at a sampling rate that is lower than a predetermined rate, and, in the comparative example, the vibration is sampled at a sampling rate that is higher than a predetermined rate.

Foremost, in step S1, the vibration measurement unit 7 in the roller bearing condition monitoring system 1 measures the vibration in the vicinity of the roller bearing 2 using a vibration acceleration sensor at a sampling rate that is lower than a predetermined rate. The A/D conversion unit 8 digitizes the measured analog vibration waveform data.

Next, in step S2, the envelope detection unit 14 in the roller bearing condition monitoring system 1 performs absolute value rectification to the vibration waveform data acquired with the measured value acquisition unit 13 and digitized with the A/D conversion unit 8. The term "absolute value rectification" means the generation of a waveform of the amplitude of the vibration waveform.

Next, in step S3, the pulse wave search unit 15 searches for a pulse wave which is generated in the theoretically obtained generation cycle T of the pulse wave stored in the storage unit 17 from the waveform that underwent the absolute value rectification in step S2. Specifically, the pulse wave search unit 15 divides the time-series digital vibration waveform in the generation cycle Tj (j = 1, 2, 3) of the pulse wave, and obtains the maximum value of the amplitude value in each section and the generation time interval thereof. The pulse wave search unit 15 compares the obtained generation time interval of the pulse wave and the generation cycle Tj (j = 1, 2, 3) of the pulse wave stored in the storage unit 17, and, if they match, it is determined that a fault has occurred at the corresponding site.

For example, the time-series digital vibration waveform is divided in the generation cycle T1 of the pulse wave, the maximum value of the amplitude value in each section and the generation time interval thereof are obtained, and, when the obtained generation time interval D and the generation cycle T1 match, it can be determined that a fault has occurred in the inner ring of the roller bearing 2. Similarly, in the case of the generation cycle T2 of the pulse wave, it can be determined that a fault has occurred in the outer ring of the roller bearing 2 and, in the case of the generation cycle T3 of the pulse wave, it can be determined that a fault has occurred in the rolling element of the roller bearing 2.

Next, in step S4, in order to evaluate the level of damage of the fault site identified with the pulse wave search unit 15, the maximum pulse wave extraction unit 16 extracts the pulse wave in which the amplitude becomes maximum among the searched pulse waves, and obtains the amplitude value thereof. Once the execution of step S4 is completed, processing of the roller bearing condition monitoring system 1 is ended.

The control unit 9 stores the fault site obtained based on the foregoing processing of step S1 to step S4, the maximum value of the amplitude of the pulse wave, and the rotation speed data, for example, in a predetermined storage area of the storage unit 17 upon linking such information for each time t that such information was acquired.

The control unit 9 shows, as numerical values or a graph, the maximum value of the amplitude of the pulse wave for each time t obtained based on the overall processing flow of the roller bearing condition monitoring system 1 described above, and outputs such information on a display screen 50a of the display unit 10 via the output I/F 18. Fig. 4 is a diagram showing an example of the screen display of the display unit of the roller bearing condition monitoring system according to the first embodiment.

As shown in Fig. 4, on the display screen 50a, which is a GUI or the like, the horizontal axis represents the time t, the vertical axis represents the maximum value of the amplitude of the pulse wave (amplitude value), and the legend shows the identifying information of the roller bearing 2 in which a fault has occurred and the fault site. Fig. 4 shows the time change of the amplitude value of the pulse wave in the roller bearing 2. On the display screen 50a, it is also possible to display a display attribute that is different from the plot display of the amplitude value at each time according to the size of the amplitude value, and show the progress of the damage at multiple stages.

Moreover, the control unit 9 may also determine that a fault has occurred in the corresponding roller bearing 2 based on the amplitude value of the pulse wave in the roller bearing 2, and emit an alarm or output a report. The control unit 9 performs diagnosis of automatically determining that a fault has occurred at the corresponding site of the corresponding roller bearing 2, for example, when the amplitude value of the pulse wave exceeds a predetermined threshold, and displays the diagnostic result, for example, on the display screen of the display unit 10.

Moreover, Fig. 5 is a diagram showing an example of the diagnostic result of the roller bearing condition monitoring system according to the first embodiment. As illustrated in Fig. 5, the control unit 9 records the diagnostic result of the roller bearing condition monitoring system 1 in a diagnostic result table TA1, which includes information in the respective columns of date/time, damaged bearing, damaged site, and damage level, and stores such information in the storage unit 17. The "damage level" shows the progress of the damage in multiple stages, for instance, such as "high", "medium", and "low" by determining the amplitude value based on a plurality of thresholds. Note that the format of saving the diagnostic result is not limited to a table.

For example, the record of the first line in Fig. 5 shows that the control unit 9 performed a diagnosis to the effect that a fault having an amplitude value of "a1" and a damage level of "low" occurred in the "outer ring" of the "A bearing" on "2018/12/1 13:00". Moreover, for example, the record of the fourth line and the fifth line in Fig. 5 shows that the control unit 9 performed a diagnosis to the effect that a fault having an amplitude value of "a4" and a damage level of "low" occurred in the "outer ring" of the "A bearing" and a fault having an amplitude value of "b4" and a damage level of "medium" occurred in the "inner ring" of the "B bearing" on "2018/12/1 13:30". The control unit 9 may also display, on the display screen of the display unit 10, the damage level recorded in the diagnostic result table TA1 in chronological order for each damaged site of the roller bearing 2 (inner ring 4, outer ring 5, and rolling element 6).

As described above, in a device or the like including the roller bearing 2 to be monitored, a fault that occurred in the roller bearing 2 can be recognized from its initial stage, in which such fault will not immediately lead to an accident, and as such fault gradually becomes more serious. Thus, in a device or the like including the roller bearing 2 to be monitored, it is possible to perform maintenance at a stage when the fault that occurred in the roller bearing 2 reaches a predetermined level, which is less than the level that will immediately lead to an accident. Moreover, in a device or the like including the roller bearing 2 to be monitored, when the fault that occurred in the roller bearing 2 reaches a level that may soon lead to an accident, such device or the like can be immediately stopped. It is thereby possible to prevent the occurrence of an accident caused by the roller bearing 2 in operation.

<Effect of first embodiment>

In this embodiment, a vibration in the vicinity of the roller bearing 2 is measured at a low sampling rate and with a data length including the pulse wave caused by a fault, the pulse wave caused by the fault is searched from the measured vibration waveform based on theoretical generation cycles T1, T2, T3, and a maximum amplitude in the searched pulse wave is evaluated. It is thereby possible to obtain an amplitude value of a circular vibration at a high probability even at a low sampling rate, as well as capture a circular vibration of an outer ring of the bearing of a high frequent/high amplitude. In other words, a fault that occurred within the roller bearing 2 can be detected, even at a low sampling rate, at the same accuracy when measured based on high-speed sampling.

Consequently, an expensive A/D converter compatible with high-speed sampling is not required, the data length including the pulse wave caused by the fault can be suppressed in comparison to a case based on high-speed sampling, the capacity of the storage unit 17 can be reduced even when monitoring the condition of a plurality of roller bearings 2 and, therefore, the introduction cost of the roller bearing condition monitoring system 1 can be reduced.

Moreover, the user can easily recognize which roller bearing 2 includes a fault and the degree of such fault based on changes in the amplitude value shown graphically on the display unit 10 or based on automatically emitted alarms or output reports. For example, the degree of fault that occurred in the roller bearing 2 can be recognized according to how many times higher the amplitude value shown graphically on the display unit 10 has become in comparison to the initial stage when such fault first occurred, or according to how much time has elapsed from the initial stage when such fault first occurred.

Thus, when it is predicted that a serious accident may occur soon based on the degree of the fault, it is possible to immediately stop the device or the like including the roller bearing 2 to be monitored and thereby prevent such accident from happening. Moreover, unnecessary maintenance work can be reduced by performing maintenance according to the condition of the roller bearing 2.

[Second embodiment]

Fig. 6 is a functional block diagram of the roller bearing condition monitoring system according to the second embodiment. Fig. 7 is an overall processing flowchart of the roller bearing condition monitoring system according to the second embodiment. The roller bearing condition monitoring system 1B according to the second embodiment additionally comprises a frequency analyzing unit 11 in comparison to the roller bearing condition monitoring system 1 of the first embodiment. Moreover, in the overall processing of the roller bearing condition monitoring system according to the second embodiment, step S2a of performing frequency analysis is added between step S2 and step S3 in the flow of the first embodiment shown in Fig. 3.

The processing of step S1 and step S2 of Fig. 6 is the same as the processing of the first embodiment shown in Fig. 3.

In step S2a which follows step S2 of Fig. 6, the frequency analyzing unit 11 in the roller bearing condition monitoring system 1B performs frequency analysis such as FFT to the digital vibration waveform on the time axis that underwent absolute value rectification performed by the envelope detection unit 14. Subsequently, the frequency analyzing unit 11 detects a peak frequency which is one frequency within a predetermined vicinity among the frequencies $f_j$ ($j = 1, 2, 3$) ($= 1/T$) theoretically obtained in Formulas (1) to (3) above and in which the amplitude has peaked. The peak frequency f' within the predetermined vicinity satisfies, for example, f' = $f_j \pm \Delta f$ = $1/T \pm \Delta f$. However, $\Delta f$ is a predetermined value. Furthermore, the frequency analyzing unit 11 obtains a cycle T' as a reciprocal 1/f' of the detected peak frequency f'.

In step S3 which follows step S2a, the pulse wave search unit 15 in the roller bearing condition monitoring system 1B uses the cycle T' obtained by the frequency analyzing unit 11 and performs a pulse wave search in the same manner as the first embodiment. After the processing of step S3 is ended, the roller bearing condition monitoring system 1B performs the same processing as the first embodiment.

<Effect of second embodiment>

In the first embodiment, a pulse wave is searched using the generation cycle T of the pulse wave that was theoretically obtained in advance. Nevertheless, actually, there are cases where the generation cycle of the pulse wave caused by the fault and the generation cycle T of the pulse wave stored in the storage unit 17 are different due to a measuring error of the rotation speed, or a slight slip of the rolling element. Thus, in the second embodiment, upon performing a pulse wave search, a cycle T' based on the peak frequency ($1/T\pm\Delta f$) detected within a predetermined vicinity of the frequency $1/T$ of the pulse wave, which is a reciprocal of the generation cycle T, is used in substitute for the generation cycle T of the pulse wave stored in the storage unit 17. It is thereby possible to maintain the accuracy of the pulse wave search even when there is a variation in the generation cycle of the pulse wave due to a measuring error of the rotation speed, or a slight slip of the rolling element.

<Computer which realizes roller bearing condition monitoring system>

Fig. 8 is a diagram showing the hardware configuration of the computer which realizes the roller bearing condition monitoring system. In a computer 5000 which realizes the roller bearing condition monitoring system 1, 1B of the first embodiment and the second embodiment, a CPU (Central Processing Unit) 5300, a memory 5400 such as a RAM (Random Access Memory), an input device 5600 (for instance, keyboard, mouse, touch panel, etc.), and an output device 5700 (for instance, video graphic card connected to an external display monitor) are mutually connected via a memory controller 5500.

In the computer 5000, the roller bearing condition monitoring system 1, 1B is realized by predetermined programs being read from an external storage device 5800 such as an SSD (Solid State Drive) or an HDD (Hard Disk Drive) via an I/O (Input/Output) controller 5200, and executed based on the coordination of the CPU 5300 and the memory 5400. Otherwise, the predetermined programs may also be acquired from an external computer through communication via a network interface 5100.

The present invention is not limited to the foregoing embodiments, and includes various modified examples. For example, the foregoing embodiments were explained in detail in order to explain the present invention in an easy-to-understand manner, and the present invention is not necessarily limited to a type comprising all of the explained configurations. Moreover, a part of the configuration of a certain embodiment may be replaced with the configuration of another embodiment, and the configuration of a certain embodiment may be added to the configuration of another embodiment. Furthermore, a part of the configuration of each embodiment can be added to, deleted from, replaced with, integrated with, or distributed to another configuration. In addition, the various types of processing shown in the embodiments may be distributed or integrated as appropriate pursuant to the processing efficiency or the mounting efficiency.

REFERENCE SIGNS LIST

1, 1B: roller bearing condition monitoring system, 2: roller bearing, 3: rotating shaft, 4: inner ring, 5: outer ring, 6: rolling element, 7: vibration measurement unit, 8: A/D conversion unit, 9: control unit, 10: display unit, 11: frequency analyzing unit, 12: input I/F, 13: measured value acquisition unit, 14: envelope detection unit, 15: pulse wave search unit, 16: maximum pulse wave extraction unit, 17: storage unit, 18: output I/F, 19: internal bus, 50a: display screen, 5000: computer, 5100: network interface, 5200: controller, 5400: memory, 5500: memory controller, 5600: input device, 5700: output device, 5800: external storage device

**Claims**

1. A condition monitoring system (1, 1B) of a roller bearing (2) which supports a rotating shaft (3), comprising:

   a vibration measurement unit (7) which measures a vibration of the roller bearing (2) based on low-speed sampling in which a sampling rate is lower than a predetermined rate, wherein the predetermined rate is a sampling rate capable of capturing a vibration frequency caused by a fault of the roller bearing (2);
   an envelope detection unit (14) which detects an envelope of an amplitude of a vibration waveform based on the vibration of the roller bearing (2) measured with the vibration measurement unit (7);
   a pulse wave search unit (15) which searches for pulse waves of a cycle that matches a predetermined cycle based on a theoretical frequency of a vibration waveform, which is generated when the roller bearing (2) is damaged, from the envelope detected with the envelope detection unit (14); and
   a pulse wave extraction unit (16) which extracts a pulse wave having a maximum amplitude value from the pulse waves of the cycle that matches the predetermined cycle obtained from the search conducted by the pulse wave search unit (15),

wherein condition monitoring of the roller bearing (2) is performed based on the maximum amplitude value of the pulse wave extracted with the pulse wave extraction unit (16),

wherein a damage level of the roller bearing (2) is diagnosed based on the maximum amplitude value of the pulse wave extracted with the pulse wave extraction unit (16).

2. The condition monitoring system according (1, 1B) to claim 1, wherein
the predetermined cycle is a reciprocal of the theoretical frequency.

3. The condition monitoring system (1, 1B) according to claim 1, further comprising:

a frequency analyzing unit (11) which performs frequency analysis of the envelope detected with the envelope detection unit (14), and obtains

the predetermined cycle as a reciprocal of a peak frequency within a predetermined vicinity of the theoretical frequency in the envelope that underwent the frequency analysis.

4. The condition monitoring system (1, 1B) according to any one of claims 1 to 3, wherein
the theoretical frequency is a first frequency of a pulse wave which is generated when a rolling element (6) passes by a fault that occurred to an inner ring (4) in the roller bearing (2), a second frequency of a pulse wave which is generated when the rolling element (6) passes by a fault that occurred to an outer ring (5) in the roller bearing (2), and a third frequency which is double a rotation frequency of the rolling element (6) of the roller bearing (2).

5. The condition monitoring system (1, 1B) according to claim 4, wherein
whether the inner ring (4), the outer ring (5) or the rolling element (6) in the roller bearing (2) has been damaged is determined based on whether a cycle of a pulse wave obtained from the search conducted by the pulse wave search unit (15) matches a first cycle based on the first frequency, a second cycle based on the second frequency or a third cycle based on the third frequency.

6. The condition monitoring system (1, 1B) according to any one of claims 1 to 5, wherein
a change of the maximum amplitude value of the pulse wave extracted with the pulse wave extraction unit (16) over time is displayed on a display unit (10).

7. The condition monitoring system (1,1B) according to any one of claims 1 to 6, wherein
it is determined that the roller bearing (2) has been damaged when the maximum amplitude value of the pulse wave extracted with the pulse wave extraction unit (16) exceeds a predetermined threshold.

8. The condition monitoring system (1, 1B) according to claim 7, wherein
information indicating that the roller bearing (2) has been damaged is output.

9. The condition monitoring system (1, 1B) according to any one of claims 1 to 8, wherein
the vibration measurement unit (7) measures the vibration of the roller bearing (2) at a timing that a device comprising the roller bearing (2) enters a predetermined operating state, or in predetermined time intervals after the device enters the predetermined operating state.

10. A condition monitoring method of a roller bearing (2) executed by a condition monitoring system (1, 1B) of a roller bearing (2) which supports a rotating shaft (3), comprising:

a vibration measurement step of measuring a vibration of the roller bearing by a vibration measurement unit (7) based on low-speed sampling in which a sampling rate is lower than a predetermined rate, wherein the predetermined rate is a sampling rate capable of capturing a vibration frequency caused by a fault of the roller bearing (2);

an envelope detection step of detecting an envelope of an amplitude of a vibration waveform by an envelope detection unit (14) based on the vibration of the roller bearing (2) measured with the vibration measurement unit (7);

a pulse wave search step of searching for pulse waves of a cycle that matches a predetermined cycle by a pulse wave search unit (15) based on a theoretical frequency of a vibration waveform, which is generated when the roller bearing (2) is damaged, from the envelope detected with the envelope detection unit (14);

a pulse wave extraction step of extracting a pulse wave having a maximum amplitude value by a pulse wave extraction unit (16) from the pulse waves of the cycle that matches the predetermined cycle obtained from the search conducted by the pulse wave search unit (15); and

a condition monitoring step of performing condition monitoring of the roller bearing (2) based on the maximum amplitude value of the pulse wave extracted in the pulse wave extraction step,

wherein a damage level of the roller bearing (2) is diagnosed based on the maximum amplitude value of the pulse wave extracted with the pulse wave extraction unit (16).

**Patentansprüche**

1. Zustandsüberwachungssystem (1, 1B) eines Wälzlagers (2), das eine Drehwelle (3) trägt, umfassend:

   eine Vibrationsmesseinheit (7), die eine Vibration des Wälzlagers (2) basierend auf einer Abtastung mit niedriger Geschwindigkeit misst, bei der eine Abtastrate niedriger als eine vorbestimmte Rate ist, wobei die vorbestimmte Rate eine Abtastrate ist, die in der Lage ist, eine Vibrationsfrequenz **zu** erfassen, die durch einen Fehler des Wälzlagers (2) verursacht wird;
   eine Hüllkurvenerfassungseinheit (14), die eine Hüllkurve einer Amplitude einer Vibrationswellenform basierend auf der Vibration des Wälzlagers (2) erfasst, die mit der Vibrationsmesseinheit (7) gemessen wird;
   eine Pulswellensucheinheit (15), die nach Pulswellen eines Zyklus sucht, der mit einem vorbestimmten Zyklus übereinstimmt, basierend auf einer theoretischen Frequenz einer Vibrationswellenform, die erzeugt wird, wenn das Wälzlager (2) beschädigt ist, aus der Hüllkurve, die mit der Hüllkurvenerfassungseinheit (14) erfasst wird;
   und
   eine Pulswellenextraktionseinheit (16), die eine Pulswelle mit einem maximalen Amplitudenwert aus den Pulswellen des Zyklus extrahiert, der mit dem vorbestimmten Zyklus übereinstimmt, der aus der Suche erhalten wird, die von der Pulswellensucheinheit (15) durchgeführt wird, wobei eine Zustandsüberwachung des Wälzlagers (2) basierend auf dem maximalen Amplitudenwert der Pulswelle durchgeführt wird, die mit der Pulswellenextraktionseinheit (16) extrahiert wird,
   wobei ein Beschädigungsgrad des Wälzlagers (2) basierend auf dem maximalen Amplitudenwert der Pulswelle diagnostiziert wird, die mit der Pulswellenextraktionseinheit (16) extrahiert wird.

2. Zustandsüberwachungssystem (1, 1B) nach Anspruch 1, wobei
   der vorbestimmte Zyklus ein Kehrwert der theoretischen Frequenz ist.

3. Zustandsüberwachungssystem (1, 1B) nach Anspruch 1, ferner umfassend:

   eine Frequenzanalyseeinheit (11), die eine Frequenzanalyse der Hüllkurve durchführt, die mit der Hüllkurvenerfassungseinheit (14) erfasst wird, und
   den vorbestimmten Zyklus als einen Kehrwert einer Spitzenfrequenz innerhalb einer vorbestimmten Nähe der theoretischen Frequenz in der Hüllkurve bestimmt, die der Frequenzanalyse unterzogen wurde.

4. Zustandsüberwachungssystem (1, 1B) nach einem der Ansprüche 1 bis 3, wobei
   die theoretische Frequenz eine erste Frequenz einer Pulswelle ist, die erzeugt wird, wenn ein Wälzelement (6) an einem Fehler vorbeiläuft, der an einem Innenring (4) in dem Wälzlager (2) aufgetreten ist, eine zweite Frequenz einer Pulswelle ist, die erzeugt wird, wenn das Wälzelement (6) an einem Fehler vorbeiläuft, der an einem Außenring (5) in dem Wälzlager (2) aufgetreten ist, und eine dritte Frequenz ist, die das Doppelte einer Rotationsfrequenz des Wälzelements (6) des Wälzlagers (2) ist.

5. Zustandsüberwachungssystem (1, 1B) nach Anspruch 4, wobei
   ob der Innenring (4), der Außenring (5) oder das Wälzelement (6) in dem Wälzlager (2) beschädigt wurde, basierend darauf bestimmt wird, ob ein Zyklus einer Pulswelle, der aus der Suche erhalten wird, die von der Pulswellensucheinheit (15) durchgeführt wird, mit einem ersten Zyklus basierend auf der ersten Frequenz, einem zweiten Zyklus basierend auf der zweiten Frequenz oder einem dritten Zyklus basierend auf der dritten Frequenz übereinstimmt.

6. Zustandsüberwachungssystem (1, 1B) nach einem der Ansprüche 1 bis 5, wobei
   eine Änderung des maximalen Amplitudenwerts der Pulswelle, die mit der Pulswellenextraktionseinheit (16) extrahiert wird, im Laufe der Zeit auf einer Anzeigeeinheit (10) angezeigt wird.

7. Zustandsüberwachungssystem (1, 1B) nach einem der Ansprüche 1 bis 6, wobei
   bestimmt wird, dass das Wälzlager (2) beschädigt wurde, wenn der maximale Amplitudenwert der Pulswelle, die mit der Pulswellenextraktionseinheit (16) extrahiert wird, einen vorbestimmten Schwellenwert überschreitet.

8. Zustandsüberwachungssystem (1, 1B) nach Anspruch 7, wobei
   Informationen, die angeben, dass das Wälzlager (2) beschädigt wurde, ausgegeben werden.

9. Zustandsüberwachungssystem (1, 1B) nach einem der Ansprüche 1 bis 8, wobei
   die Vibrationsmesseinheit (7) die Vibration des Wälzlagers (2) zu einem Zeitpunkt misst, zu dem eine Vorrichtung, die das Wälzlager (2) umfasst, in einen vorbestimmten Betriebszustand eintritt, oder in vorbestimmten Zeitintervallen, nachdem die Vorrichtung in den vorbestimmten Betriebszustand eintritt.

**10.** Zustandsüberwachungsverfahren eines Wälzlagers (2), das durch ein Zustandsüberwachungssystem (1, 1B) eines Wälzlagers (2), das eine Drehwelle (3) trägt, ausgeführt wird, umfassend:

einen Vibrationsmessschritt des Messens einer Vibration des Wälzlagers durch eine Vibrationsmesseinheit (7) basierend auf einer Abtastung mit niedriger Geschwindigkeit, bei der eine Abtastrate niedriger als eine vorbestimmte Rate ist, wobei die vorbestimmte Rate eine Abtastrate ist, die in der Lage ist, eine Vibrationsfrequenz **zu** erfassen, die durch einen Fehler des Wälzlagers (2) verursacht wird;

einen Hüllkurvenerfassungsschritt des Erfassens einer Hüllkurve einer Amplitude einer Vibrationswellenform durch eine Hüllkurvenerfassungseinheit (14) basierend auf der Vibration des Wälzlagers (2), die mit der Vibrationsmesseinheit (7) gemessen wird;

einen Pulswellensuchschritt des Suchens nach Pulswellen eines Zyklus, der mit einem vorbestimmten Zyklus übereinstimmt, durch eine Pulswellensucheinheit (15) basierend auf einer theoretischen Frequenz einer Vibrationswellenform, die erzeugt wird, wenn das Wälzlager (2) beschädigt ist, aus der Hüllkurve, die mit der Hüllkurvenerfassungseinheit (14) erfasst wird;

einen Pulswellenextraktionsschritt des Extrahierens einer Pulswelle mit einem maximalen Amplitudenwert durch eine Pulswellenextraktionseinheit (16) aus den Pulswellen des Zyklus, der mit dem vorbestimmten Zyklus übereinstimmt, der aus der Suche erhalten wird, die von der Pulswellensucheinheit (15) durchgeführt wird; und

einen Zustandsüberwachungsschritt des Durchführens einer Zustandsüberwachung des Wälzlagers (2) basierend auf dem maximalen Amplitudenwert der Pulswelle, die in dem Pulswellenextraktionsschritt extrahiert wird, wobei ein Beschädigungsgrad des Wälzlagers (2) basierend auf dem maximalen Amplitudenwert der Pulswelle diagnostiziert wird, die mit der Pulswellenextraktionseinheit (16) extrahiert wird.

## Revendications

**1.** Système de surveillance d'état (1, 1B) d'un roulement à rouleaux (2) qui supporte un arbre rotatif (3), comprenant :

une unité de mesure de vibration (7) qui mesure une vibration du roulement à rouleaux (2) sur la base d'un échantillonnage à faible vitesse dans lequel un taux d'échantillonnage est inférieur à un taux prédéterminé, dans lequel le taux prédéterminé est un taux d'échantillonnage capable de capturer une fréquence de vibration provoquée par un défaut du roulement à rouleaux (2) ;

une unité de détection d'enveloppe (14) qui détecte une enveloppe d'une amplitude d'une forme d'onde de vibration sur la base de la vibration du roulement à rouleaux (2) mesurée avec l'unité de mesure de vibration (7) ;

une unité de recherche d'onde pulsée (15) qui recherche des ondes pulsées d'un cycle qui correspond à un cycle prédéterminé sur la base d'une fréquence théorique d'une forme d'onde de vibration, qui est générée lorsque le roulement à rouleaux (2) est endommagé, à partir de l'enveloppe détectée avec l'unité de détection d'enveloppe (14) ;

et

une unité d'extraction d'onde pulsée (16) qui extrait une onde pulsée ayant une valeur d'amplitude maximale à partir des ondes pulsées du cycle qui correspond au cycle prédéterminé obtenu à partir de la recherche effectuée par l'unité de recherche d'onde pulsée (15),

dans lequel la surveillance d'état du roulement à rouleaux (2) est effectuée sur la base de la valeur d'amplitude maximale de l'onde pulsée extraite avec l'unité d'extraction d'onde pulsée (16),

dans lequel un niveau d'endommagement du roulement à rouleaux (2) est diagnostiqué sur la base de la valeur d'amplitude maximale de l'onde pulsée extraite avec l'unité d'extraction d'onde pulsée (16).

**2.** Système de surveillance d'état (1, 1B) selon la revendication 1, dans lequel
le cycle prédéterminé est un inverse de la fréquence théorique.

**3.** Système de surveillance d'état (1, 1B) selon la revendication 1, comprenant en outre :

une unité d'analyse de fréquence (11) qui effectue une analyse de fréquence de l'enveloppe détectée avec l'unité de détection d'enveloppe (14), et obtient

le cycle prédéterminé comme un inverse d'une fréquence de crête dans un voisinage prédéterminé de la fréquence théorique dans l'enveloppe qui a subi l'analyse de fréquence.

**4.** Système de surveillance d'état (1, 1B) selon l'une quelconque des revendications 1 à 3, dans lequel
la fréquence théorique est une première fréquence d'une onde pulsée qui est générée lorsqu'un élément roulant (6) passe par un défaut qui s'est produit sur une bague interne (4) dans le roulement à rouleaux (2), une deuxième fréquence d'une onde pulsée qui est générée lorsque l'élément roulant (6) passe par un défaut qui s'est produit sur une bague externe (5) dans le roulement à rouleaux (2), et une troisième fréquence qui est le double d'une fréquence de rotation de l'élément roulant (6) du roulement à rouleaux (2).

5. Système de surveillance d'état (1, 1B) selon la revendication 4, dans lequel
le fait que la bague interne (4), la bague externe (5) ou l'élément roulant (6) dans le roulement à rouleaux (2) a été endommagé est déterminé sur la base du fait qu'un cycle d'une onde pulsée obtenu à partir de la recherche effectuée par l'unité de recherche d'onde pulsée (15) correspond à un premier cycle sur la base de la première fréquence, un deuxième cycle sur la base de la deuxième fréquence ou un troisième cycle sur la base de la troisième fréquence.

6. Système de surveillance d'état (1, 1B) selon l'une quelconque des revendications 1 à 5, dans lequel un changement de la valeur d'amplitude maximale de l'onde pulsée extraite avec l'unité d'extraction d'onde pulsée (16) au fil du temps est affiché sur une unité d'affichage (10).

7. Système de surveillance d'état (1, 1B) selon l'une quelconque des revendications 1 à 6, dans lequel il est déterminé que le roulement à rouleaux (2) a été endommagé lorsque la valeur d'amplitude maximale de l'onde pulsée extraite avec l'unité d'extraction d'onde pulsée (16) dépasse un seuil prédéterminé.

8. Système de surveillance d'état (1, 1B) selon la revendication 7, dans lequel
des informations indiquant que le roulement à rouleaux (2) a été endommagé sont délivrées en sortie.

9. Système de surveillance d'état (1, 1B) selon l'une quelconque des revendications 1 à 8, dans lequel l'unité de mesure de vibration (7) mesure la vibration du roulement à rouleaux (2) à un moment où un dispositif comprenant le roulement à rouleaux (2) entre dans un état de fonctionnement prédéterminé, ou à des intervalles de temps prédéterminés après que le dispositif est entré dans l'état de fonctionnement prédéterminé.

10. Procédé de surveillance d'état d'un roulement à rouleaux (2) exécuté par un système de surveillance d'état (1, 1B) d'un roulement à rouleaux (2) qui supporte un arbre rotatif (3), comprenant :

une étape de mesure de vibration consistant à mesurer une vibration du roulement à rouleaux par une unité de mesure de vibration (7) sur la base d'un échantillonnage à faible vitesse dans lequel un taux d'échantillonnage est inférieur à un taux prédéterminé, dans lequel le taux prédéterminé est un taux d'échantillonnage capable de capturer une fréquence de vibration provoquée par un défaut du roulement à rouleaux (2) ;

une étape de détection d'enveloppe consistant à détecter une enveloppe d'une amplitude d'une forme d'onde de vibration par une unité de détection d'enveloppe (14) sur la base de la vibration du roulement à rouleaux (2) mesurée avec l'unité de mesure de vibration (7) ;

une étape de recherche d'onde pulsée consistant à rechercher des ondes pulsées d'un cycle qui correspond à un cycle prédéterminé par une unité de recherche d'onde pulsée (15) sur la base d'une fréquence théorique d'une forme d'onde de vibration, qui est générée lorsque le roulement à rouleaux (2) est endommagé, à partir de l'enveloppe détectée avec l'unité de détection d'enveloppe (14) ;

une étape d'extraction d'onde pulsée consistant à extraire une onde pulsée ayant une valeur d'amplitude maximale par une unité d'extraction d'onde pulsée (16) à partir des ondes pulsées du cycle qui correspond au cycle prédéterminé obtenu à partir de la recherche effectuée par l'unité de recherche d'onde pulsée (15) ; et

une étape de surveillance d'état consistant à effectuer une surveillance d'état du roulement à rouleaux (2) sur la base de la valeur d'amplitude maximale de l'onde pulsée extraite à l'étape d'extraction d'onde pulsée,

dans lequel un niveau d'endommagement du roulement à rouleaux (2) est diagnostiqué sur la base de la valeur d'amplitude maximale de l'onde pulsée extraite avec l'unité d'extraction d'onde pulsée (16).

FIG. 1

EP 3 936 849 B1

# FIG. 2

VIBRATION MEASUREMENT UNIT — 7

OPERATION DATA

A/D CONVERSION UNIT — 8

9

INPUT I/F — 12

MEASURED VALUE ACQUISITION UNIT — 13

ENVELOPE DETECTION UNIT — 14

PULSE WAVE SEARCH UNIT — 15

MAXIMUM PULSE WAVE EXTRACTION UNIT — 16

20

19

STORAGE UNIT — 17

OUTPUT I/F — 18

DISPLAY UNIT — 10

# FIG. 3

START

↓

MEASURE VIBRATION
CONVERT A/D
ACQUIRE MEASURED VALUE

LOW SPEED
SAMPLING    S1

HIGH SPEED SAMPLING

↓

DETECT ENVELOPE    S2

↓

SEARCH FOR PULSE WAVE    S3

GENERATION CYCLE T
OF PULSE WAVE

STORAGE
UNIT

↓

EXTRACT MAXIMUM PULSE WAVE    S4

↓

END

# FIG. 4

50a

FIG. 5

TA1

| DATE/TIME | DAMAGED BEARING | DAMAGED SITE | DAMAGE LEVEL |
|---|---|---|---|
| 2018/12/1 13:00 | A BEARING | OUTER RING | LOW |
| 2018/12/1 13:10 | A BEARING | OUTER RING | LOW |
| 2018/12/1 13:20 | A BEARING | OUTER RING | LOW |
| 2018/12/1 13:30 | A BEARING | OUTER RING | LOW |
|  | B BEARING | INNER RING | MEDIUM |
| . . . | . . . | . . . | . . . |

# FIG. 6

# FIG. 7

# FIG. 8

# FIG. 9(a)

(a)

INNER RING
OUTER RING
ROLLING ELEMENT
t=t1    t=t2

VIBRATION ACCELERATION
t1    t2    TIME

INTERNAL FAULT OF BEARING

EXCITE CIRCULAR VIBRATION OF BEARING OUTER RING

FIG. 9(b) PULSE WAVE CAUSED BY BEARING FAULT GENERATION CYCLE

CIRCULAR VIBRATION

VIBRATION ACCELERATION

TIME

DETECT ENVELOPE

FIG. 9(c)

VIBRATION ACCELERATION

TIME

FFT OPERATION

FIG. 9(d)

AMPLITUDE VALUE

MONITOR AMPLITUDE CHANGE OF FAULT PASSING FREQUENCY

FREQUENCY

FIG. 9(e)

AMPLITUDE VALUE

TIME

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006125976 A
- JP 2012042338 A
- EP 1211500 A1
- US 2010332186 A1
- US 6526829 B1

**Non-patent literature cited in the description**

- **OSAMI MATSUSHITA et al.** Part 2] Vibration from Rotating Machinery - Vibration Problem and Vibration Diagnosis of Real Machines. *Coronasha*, 01 November 2012